# EUROPÄISCHE PATENTSCHRIFT

(11) **EP 3 613 960 B1**
(45) Veröffentlichungstag und Bekanntmachung des Hinweises auf die Patenterteilung: **23.06.2021**
(21) Anmeldenummer: 19190694.0
(22) Anmeldetag: 08.08.2019
(51) Int. Cl.: F01P 5/06, F01P 11/10

(54) **ZARGENVORRICHTUNG SOWIE LÜFTERMODUL MIT EINER SOLCHEN ZARGENVORRICHTUNG**
FRAME DEVICE AND VENTILATOR MODULE COMPRISING SAME
DISPOSITIF CHÂSSIS AINSI QUE MODULE D'AÉRATEUR DOTÉ D'UN DISPOSITIF CHÂSSIS

(30) Priorität: 23.08.2018 DE 102018214283
(43) Veröffentlichungstag der Anmeldung: 26.02.2020
(73) Patentinhaber: Brose Fahrzeugteile SE & Co. Kommanditgesellschaft, Würzburg, 97076 Würzburg (DE)
(72) Erfinder: DITTER, Frank, 97230 Estenfeld (DE); EVERS, Andre, 26125 Oldenburg (DE); FINDEISEN, Antje, 26125 Oldenburg (DE)
(74) Vertreter: FDST Patentanwälte

(56) Entgegenhaltungen:
- US-A- 4 522 160
- US-A- 5 566 954
- US-A1- 2004 211 607
- US-A1- 2016 363 039
- US-A1- 2017 226 920

## Beschreibung

Die Erfindung betrifft eine Zargenvorrichtung für ein Lüftermodul für einen Hauptkühler sowie für einen Ladeluftkühler eines Kraftfahrzeugs. Sie betrifft weiter ein Lüftermodul mit einer solchen Zargenvorrichtung.

Einige Kraftfahrzeuge weisen zusätzlich zu einem Hauptkühler (Hauptwasserkühler) für die Kühlung des Motors einen Ladeluftkühler zur Kühlung der dem Motor des Kraftfahrzeugs zugeführten Luft auf. Dabei sind die beiden Kühler, also der Hauptkühler und der Ladeluftkühler, beispielsweise übereinander angeordnet. Der Hauptkühler und der Ladeluftkühler sind allerdings an Unterschiedlichen Vorrichtungen im Motorraum befestigt, so dass bei Betrieb des Kraftfahrzeugs eine Relativbewegung der beiden Kühler auftreten kann.

Typischerweise ist dabei ein gemeinsames Lüftermodul zur Beaufschlagung beider Kühler mit einer Luftströmung vorgesehen. Aufgrund der bei Betrieb des Kraftfahrzeugs auftretenden Relativbewegung zwischen den Kühlern sowie aufgrund von Bauteiltoleranzen und gegebenenfalls aufgrund von vorgegebenen Montagefreiräumen müssten Luftspalte zwischen einer Zarge und den Kühlern entsprechend groß gewählt sein. Nachteilig resultiert dies allerdings in vergleichsweise großen Leckluftströmungen und damit zu einer verringerten Kühlleistung.

In der US 2017/226920 A1 ist ein Kühlermodul mit einem Kühler und einer Kühlerzarge mit einem abgeschrägten Rand. Die US 2017/226920 A1 offenbart weiterhin einLadeluftkühlermodul mit einem Ladeluftkühler und einer Ladeluftkühlerzarge mit einer integralen Dichtung, wobei eine Presspassung und Dichtung zwischen der integralen Dichtung und der Kühlerzarge angrenzend an den abgeschrägten Rand vorgesehen ist.

Die US 4,522,160 A offenbart eine Zargenvorrichtung für ein Lüftermodul, bei welcher eine einteilige Glasfaserummantelung der Zargenöffnung vorgesehen ist. Die Ummantelung weist einen Endabschnitt auf, an welchem eine bauchigen Dichtung befestigt ist, die die Relativbewegung zwischen Motor und Lüfter aufnimmt, um eine Beschädigung der Ummantelung zu verhindern

Der Erfindung liegt die Aufgabe zugrunde, eine geeignete Zargenvorrichtung für ein Lüftermodul anzugeben, welches sowohl den Ladeluftkühler als auch den Hauptkühler mit einer Luftströmung beaufschlagt. Dabei sollen insbesondere Leckluftströmungen vermieden sein. Des Weiteren soll ein Lüftermodul mit einer solchen Zargenvorrichtung angegeben werden.

Diese Aufgabe wird hinsichtlich der Zargenvorrichtung durch die Merkmale des Anspruchs 1 erfindungsgemäß gelöst. Hinsichtlich des Lüftermoduls wird die Aufgabe erfindungsgemäß gelöst durch die Merkmale des Anspruchs 5. Vorteilhafte Ausgestaltungen und Weiterbildungen sind Gegenstand der Unteransprüche.

Die Zargenvorrichtung ist zur Verwendung in einem Lüftermodul vorgesehen und eingerichtet, wobei das Lüftermodul wiederum zum Beaufschlagen eines Hauptkühlers sowie eines Ladeluftkühlers eines Kraftfahrzeugs mit einer Luftströmung vorgesehen ist. Die Zargenvorrichtung weist dabei eine Hauptzarge für den Hauptkühler auf, wobei die Hauptzarge insbesondere am Hauptkühler befestigt ist.

Des Weiteren weist die Zargenvorrichtung eine Ladeluftzarge für den Ladeluftkühler auf. Dabei ist zwischen den beiden Zargen, also zwischen der Hauptzarge und der Ladeluftzarge, eine Dichtung vorgesehen, mittels welcher die beiden Zargen miteinander gekoppelt sind.

Insbesondere ist mittels der Dichtung eine Leckluftströmung zwischen den beiden Zargen der Zargenvorrichtung vermieden. Zudem ist es ermöglicht, die Hauptzarge am Hauptkühler und die Ladeluftzarge am Ladeluftkühler zu befestigen. Eine bei Betrieb des Kraftfahrzeugs auftretende Relativbewegung zwischen den Kühlern und somit zwischen den Zargen wird vorteilhafterweise mittels der Dichtung ausgeglichen. Zudem sind Bauteiltoleranzen, insbesondere Bauteiltoleranzen der die Kühler tragenden Vorrichtungen sowie der Befestigungsstellen der Zargen am jeweiligen Kühler, aufgrund der Anordnung der Dichtung zwischen den beiden Zargen aufgefangen.

Zusammenfassend ist die Zargenvorrichtung mehrteilig ausgebildet. Eine erste Zarge bildet die Hauptzarge, eine zweite, dazu separate Zarge bildet die Ladeluftzarge. Dabei ist zwischen den beiden Zargen eine Dichtung vorgesehen.

Vorzugsweise sind an der Hauptzarge ein einziger Elektromotor oder zwei Elektromotoren befestigt, welcher bzw. welche jeweils ein Lüfterrad zur Erzeugung der Luftströmung antreibt bzw. antreiben. Zusätzlich oder alternativ ist an der Ladeluftzarge ein Elektromotor mit einem mit diesem gekoppelten Lüfterrad befestigt.

Zweckmäßigerweise ist an den jeweiligen Zargen eine Abdichtstruktur für den jeweils zugeordneten Kühler vorgesehen, so dass Leckluftströmungen vermieden sind. Dabei sind die Abdichtstrukturen im Bereich der Dichtung allerdings ausgespart, so dass die mittels des Lüftermoduls bewirkte Luftströmung beide Kühler beaufschlagt.

Die Dichtung ist mittels eines separaten und elastischen Bauteils gebildet. Dabei weist das Bauteil ein Profil auf. Zusammenfassend ist die Dichtung mittels eines Profilteils gebildet. Das Profilteil wird dabei bevorzugt entweder an der Ladeluftzarge oder an der Hauptzarge befestigt. In alternativer Ausgestaltung ist das Profilteil an beiden Zargen befestigt, was auch bei erhöhtem Montageaufwand vorteilhaft sein kann.

Beispielsweise ist das Profilteil aus einem Elastomer oder aus einem Schaumstoff gebildet. Insbesondere ist das Profilteil mittels Ethylen-Propylen-Dien-Kautschuk (EPDK) gebildet. Allenfalls ist das Profilteil zumindest geringfügig verformbar und nicht steif. Des Weiteren darf das Material durch die betriebsgemäß auftretenden Temperaturen, insbesondere bis zu 150°C, nicht beschädigt werden.

Zur Befestigung das Profilteils weist die entsprechende Zarge gemäß einer geeigneten Ausgestaltung an dessen der jeweils anderen Zarge zugewandten Rand Halteelemente auf. Insbesondere sind diese hakenförmig ausgebildet, so dass das Profilteil reibschlüssig und aufgrund der zumindest geringfügigen Verformbarkeit des Profilteils formschlüssig gehalten ist. Somit ist ein Verstellen des Profilteils vermieden.

Gemäß einer zweckmäßigen Weiterbildung weist das Profilteil einen ersten Profilabschnitt auf, welcher den Rand derjenigen Zarge umfasst, an welchem Rand das Profilteil gehalten ist. Dabei weist der erste Profilabschnitt an dessen am Rand anliegenden Wandung eine Profilkontur auf, welche beispielsweise als sich in Profillängsrichtung erstreckende Rippen ausgebildet ist, oder welche hakenförmig in einer Ebene zur Profillängsrichtung ausgebildet ist. Der Rand derjenigen Zarge, an welcher das Profilteil gehalten ist, weist dabei eine, vorzugsweise zur Profilkontur des ersten Profilabschnitts korrespondierende, Fügekontur auf, welche sich insbesondere durchgehend entlang des Randes erstreckt. Aufgrund eines Umgreifens der Fügekontur von der Profilkontur sind ein Abrutschen des ersten Profilbereichs vom Rand und/oder ein Abdrehen (Abknicken) des Profilteils vom Rand mit einer Drehachse entlang einer der Kante des Randes, welche Kante der anderen Zarge gegenüberliegt, verhindert.

Die mit der Fügekontur des Randes der entsprechenden Zarge und die damit korrespondierende Profilkontur des ersten Profilabschnitts ist vorzugsweise zusätzlich zu den Halteelementen vorgesehen, allerdings können die Konturen das Profilteil auch als Alternative zu den Halteelementen allein halten.

Das Profilteil weist einen zweiten Profilabschnitt auf, welcher im Querschnitt, also in einer Schnittebene senkrecht zur Profillängsachse, schlauchförmig (rohrförmig) ausgebildet ist. Alternativ ist der zweite Profilabschnitt im Querschnitt beispielsweise bogenförmig, rechteckig oder L-förmig. Allenfalls liegt dieser zweite Profilabschnitt an derjenigen Zarge an, an welchem das Profilteil nicht befestigt ist. Mit anderen Worten liegt der zweite Profilabschnitt an der Hauptzarge an, sofern das Profilteil an der Ladeluftzarge befestigt ist, oder das Profilteil liegt an der Ladeluftzarge an, sofern das Profilteil an der Hauptzarge befestigt ist.

Dabei weist der zweite Profilabschnitt eine Ausdehnung in einer Hochrichtung von der Ladeluftzarge zur Hauptzarge auf, sodass der zweite Profilabschnitt im Montagezustand bezüglich der Hochrichtung gestaucht ist. Zweckmäßigerweise weist der zweite Profilabschnitt Sollknickstellen für eine definierte Stauchung auf. Die Sollknickstellen sind beispielsweise durch eine lokalisiert (stellenweise) dünner ausgebildete Profilwandung realisiert.

Auf diese Weise ist das Profilteil an der Zarge, an welchem das Profilteil anliegt, mittels entsprechend stark reibschlüssig gegen ein Verstellen in einer Richtung senkrecht zur Hochrichtung gehalten. Zudem ist bei einer Relativbewegung der beiden Zargen im Zuge des Kraftfahrzeugbetriebs eine gegebenenfalls auftretende Abstandsänderung der Zargen durch ein Stauchen oder Entstauchen des Profilteils ausgleichbar. Weiter Vorteilhaft ist es ermöglicht, das Profilteil für unterschiedliche Fahrzeugmodelle mit unterschiedlichen Abständen zwischen den Kühlern zu verwenden, indem das Profilteil bei deren Montage entsprechend gestaucht wird.

Gemäß einer zweckmäßigen Weiterbildung ist alternativ oder vorzugsweise zusätzlich zum reibschlüssigen Halten des Profilteils durch deren Stauchung eine Haltekontur an derjenigen Zarge angeordnet, insbesondere angeformt, an welchem das Profilteil anliegt. Die Haltekontur dient dabei der Sicherung gegen ein Verrutschen des Profilteils zu den Kühlern hin.

Beispielsweise ist die Haltekontur hierzu als eine Anzahl laschenartiger Fortsätze ausgebildet, welche das Profilteil auf deren dem Kühlern zugewandten Seite zumindest abschnittsweise umfasst, oder aufgrund welcher Fortsätze bei einem Verrutschen des Profilteils zum Kühler hin eine das Verrutschen verhindernde Reibkraft bewirkt wird.

Zusammenfassend ist die Haltekontur an der Ladeluftzarge angeordnet, sofern das Profilteil an der Hauptzarge befestigt ist, bzw. ist die Haltekontur an der Hauptzarge angeordnet, sofern das Profilteil an der Ladeluftzarge befestigt ist.

Gemäß einer nicht erfindungsgemäßen Variante der Zargenvorrichtung weisen sowohl die Hauptzarge als auch die Ladeluftzarge einen sich zur jeweils anderen Zarge hin erstreckenden Wandabschnitt auf. Jeder der Wandabschnitte weist, insbesondere freiendseitig, eine Labyrinthkontur auf, welche unter Bildung einer Labyrinthdichtung miteinander verkämmen. Mit anderen Worten greifen die beiden Labyrinthkonturen ineinander, so dass eine Labyrinthdichtung gebildet ist.

Vorzugsweise sind die Wandabschnitte mit den jeweiligen Konturen an der jeweiligen Zarge angeformt.

Die Relativbewegung im Zuge des Betriebs des Kraftfahrzeugs sowie die Bauteiltoleranzen werden dabei durch ein Spiel, also einer Beweglichkeit, der beiden Konturen zueinander ausgeglichen. Dabei ist das Spiel allerdings derart klein ausgebildet, dass eine Dichtfunktion weiterhin zuverlässig erfüllt ist.

Die Zargenvorrichtung weist beispielsweise sowohl eine Labyrinthdichtung als auch eine mittels des Profilteils gebildete Dichtung auf.

Gemäß einer vorteilhaften Ausgestaltung weist ein Lüftermodul für einen Hauptkühler sowie für einen Ladeluftkühler eines Kraftfahrzeugs eine Zargenvorrichtung in einer der oben dargelegten Varianten auf. Insbesondere ist die Zargenvorrichtung dabei mehrteilig ausgebildet. So weist diese eine Hauptzarge und eine zu dieser separate Ladeluftzarge auf, wobei zwischen diesen Zargen eine Dichtung vorgesehen ist.

Nachfolgend werden Ausführungsbeispiele der Erfindung anhand einer Zeichnung näher erläutert. Darin zeigen:
- Fig. 1: in schematischer Seitenansicht eine Kühleranordnung mit einem Hauptkühler und mit einem Ladeluftkühler, wobei beide Kühler mit einem gemeinsamen Lüftermodul versehen sind, und wobei das Lüftermodul eine mehrteilige Zargenvorrichtung mit einer Hauptzarge für den Hauptkühler und mit einer Ladeluftzarge für den Ladeluftkühler aufweist,
- Fig. 2: in Frontalansicht die Kühleranordnung mit einer ersten Variante der Zargenvorrichtung, bei welcher zwischen der Hauptzarge und der Ladeluftzarge eine mittels eines Profilteils gebildete Dichtung angeordnet ist,
- Fig. 3: in vergrößertem Maßstab einen Querschnitt durch die Kühleranordnung gemäß Fig. 2, wobei das Profilteil an der Ladeluftzarge mittels hakenförmiger Halteelemente gehalten ist,
- Fig. 4: in perspektivischer Ansicht die Zargenvorrichtung, wobei an der Hauptzarge eine Haltekontur zur Sicherung gegen ein Verrutschen des Profilteils angeordnet ist,
- Fig. 5: in Vorderansicht eine alternative Ausgestaltung der ersten Variante der Zargenvorrichtung, wobei die Zargenvorrichtung für ein Lüftermodul mit lediglich einem Lüfterrad vorgesehen ist,
- Fig. 6a bis 6c: das Profilteil der Dichtung in einem Querschnitt im Normalzustand, im teilweise gestauchten Zustand bzw. in vollständig gestauchtem Zustand, und
- Fig. 7: in schematischer Darstellung eine nicht erfindungsgemäße Variante der Zargenvorrichtung, wobei Wandabschnitte der Hauptzarge und der Ladeluftzarge jeweils eine angeformte Labyrinthkontur aufweisen, welche Labyrinthkonturen unter Bildung einer Labyrinthdichtung miteinander verkämmen (verkämmt sind).

Einander entsprechende Teile und Größen sind in allen Figuren stets mit gleichen Bezugszeichen versehen.

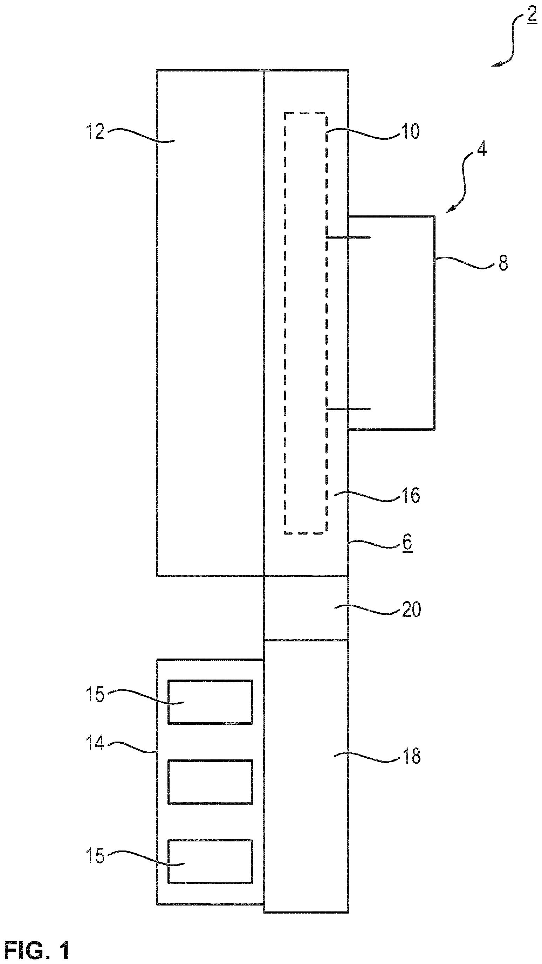

In der Fig. 1 ist schematisch in einer Seitenansicht eine Kühleranordnung 2 gezeigt, welche ein Lüftermodul 4 mit einer Zargenvorrichtung 6 umfasst. An der Zargenvorrichtung 6 ist ein, hier als Elektromotor 8 ausgebildeter, Antrieb befestigt, welcher ein Lüfterrad 10 drehantreibt. Das Lüfterrad 10 ist dabei in der Seitenansicht von der Zargenvorrichtung 6 verdeckt, weshalb das Lüfterrad 10 strichliniert dargestellt ist. Das Lüftermodul 4 dient dabei dem Zweck, Luft anzusaugen, damit sowohl ein Hauptkühler 12 als auch ein Ladeluftkühler 14 eines nicht weiter dargestellten Kraftfahrzeugs mit einer Luftströmung beaufschlagt wird.

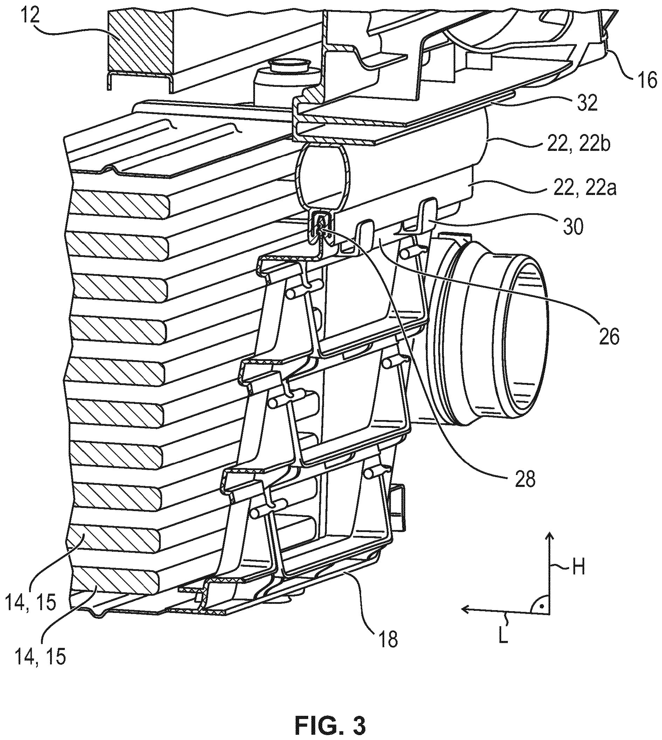

In den Fig. 1 bis 3, 5 und 7 sind Rohre 15 eines Wärmetauschers des Ladeluftkühlers 14 gezeigt. Der Hauptkühler 12 und der Ladeluftkühler 14 sind in nicht weiter dargestellter Weise an unterschiedlichen Haltevorrichtungen des Kraftfahrzeugs montiert. Aufgrund dessen kann bei Betrieb des Kraftfahrzeugs eine Relativbewegung zwischen dem Hauptkühler 12 und dem Ladeluftkühler 14 auftreten.

Die Zargenvorrichtung 6 ist sowohl am Hauptkühler 12 als auch am Ladeluftkühler 14 befestigt. Zur Vermeidung von Leckluftströmungen ist die Zargenvorrichtung 6 mit nicht weiter dargestellten Abdichtstrukturen versehen. Dabei ist die Zargenvorrichtung 6 mehrteilig aufgebaut. Diese weist ein als Hauptzarge 16 bezeichnetes erstes Bauteil für den Hauptkühler 12 sowie ein als Ladeluftzarge 18 bezeichnetes zweites Bauteil für den Ladeluftkühler 14 auf. Die beiden Zargen 16 und 18 sind dabei an dem jeweiligen Kühler 12 bzw. 14 befestigt und über eine Dichtung 20 miteinander gekoppelt. Die Dichtung 20 ist dabei zumindest geringfügig flexibel und/oder bewegbar, so dass die durch den Betrieb des Kraftfahrzeugs bewirkte Relativbewegung zwischen den beiden Kühlern 12, 14 und somit zwischen den beiden an diesen befestigten Zargen 16,18 ausgeglichen wird.

Zusammenfassend weist das Lüftermodul 4 die Zargenvorrichtung 6, den Elektromotor 8 und das Lüfterrad 10 auf.

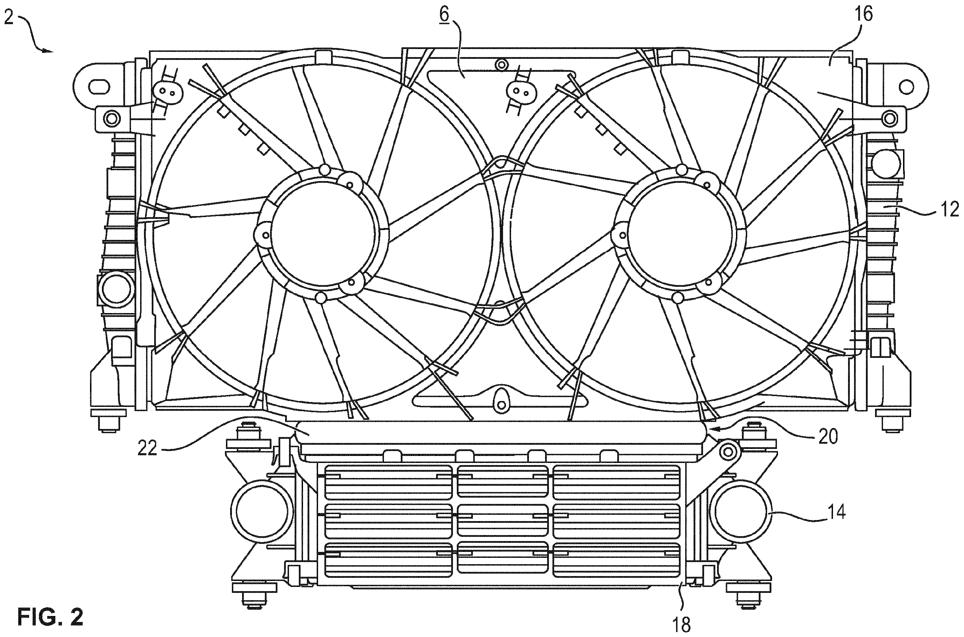

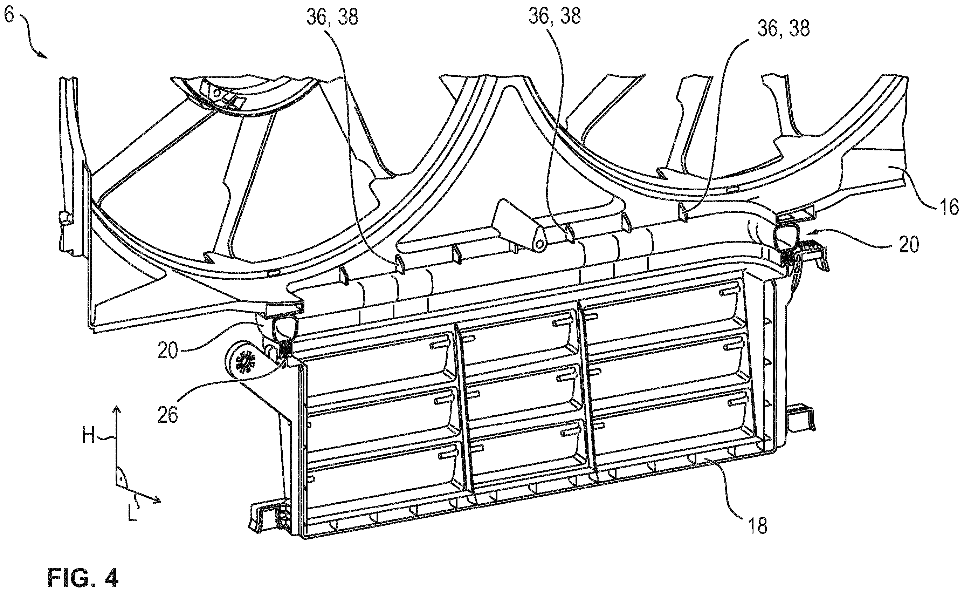

In den Figuren 2 bis 4 ist eine erfindungsgemäße Variante der Zargenvorrichtung 6 dargestellt. Dabei ist die Zargenvorrichtung 6 dazu eingerichtet, zwei Elektromotoren 8 mit jeweils ein mit diesen gekoppeltes Lüfterrad 10 zu tragen. Dabei sind die Elektromotoren 8 und die zugeordneten Lüfterräder 10 an der Hauptzarge 16 befestigt. In nicht weiter dargestellten Alternativen dieser Variante ist alternativ bzw. zusätzlich ein Lüfterrad 10 drehantreibender Elektromotor 8 an der Ladeluftzarge 18 befestigt.

Die Dichtung 20 ist mittels eines separaten und elastischen Profilteils 22 gebildet. Das Profilteil 22 ist gummiartig und besteht aus Ethylen-Propylen-Dien-Kautschuk. Das Profilteil 22 weist einen ersten Profilabschnitt 22a auf, welcher an der Ladeluftzarge 18 befestigt ist. Dieser erste Profilabschnitt 22a weist im Querschnitt eine U-Form mit zwei parallelen U-Schenkel und einem diese verbindenden U-Verbindungsschenkel auf. Auf den einander zugewandten Seiten jedes U-Schenkels ist dabei eine Profilkontur 24 angeordnet, welche in einer Ebene senkrecht zur Profillängsrichtung zu den Schenkeln emporstehende und dreiecksförmige Fortsätze aufweist, wobei die dem U-Verbindungsschenkel zugewandte Dreieckseite parallel zu diesem verläuft. Im Montagezustand umgreifen die beiden U-Schenkel den Rand 26 der Ladeluftzarge. Die Profilkontur 24 umgreift dabei eine am Rand 26 angeordnete und sich parallel zu einer Kante des Randes 26 erstreckende rippenartige Fügekontur 28. Infolgedessen ist im Montagezustand das Profilteil 22 an der Ladeluftzarge18 gegen ein Abziehen und/oder gegen ein Abdrehen mit einer Drehachse parallel zur Kante des Randes 26 gesichert.

Zusätzlich weist die Ladeluftzarge 18 an deren der Hauptzarge 16 zugewandten Rand 26 hakenförmige Halteelemente 30 auf. Die hakenförmigen Halteelemente 30 umfassen den auf der dem Ladeluftkühler 14 abgewandten Seite des Rands 26 anliegenden U-Schenkel des ersten Profilabschnitts 22a des Profilteils 22 unter Bildung eines Reibschlusses (Kraftschlusses). Beispielsweise werden die hakenförmigen Halteelemente 30 im Zuge der Montage zumindest geringfügig zum Rand 26 hin verbogen und in das Profilteil eingedrückt, sodass ein Formschluss gebildet ist.

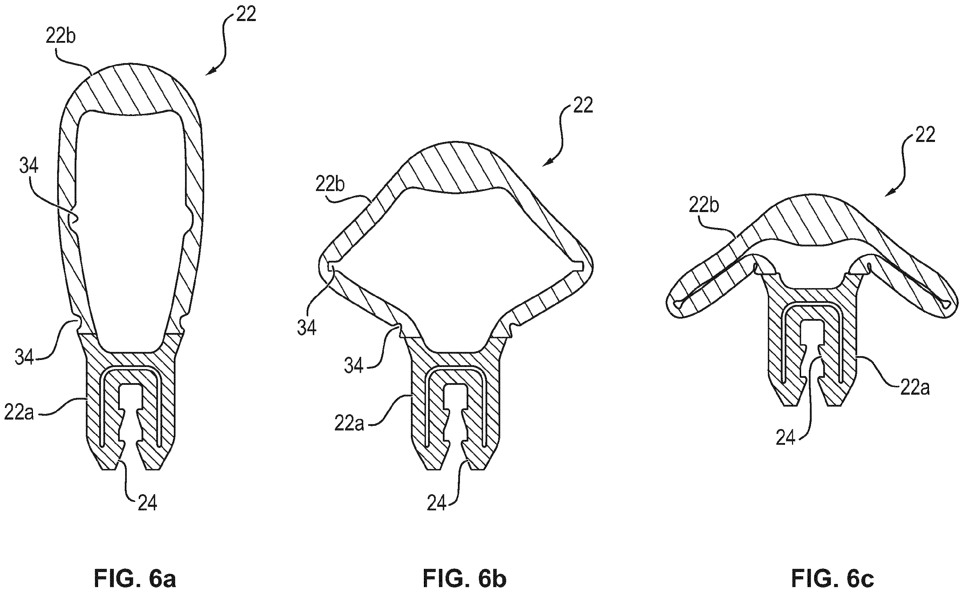

Das Profilteil 22 weist einen schlauchartigen zweiten Profilabschnitt 22b auf, welcher an den ersten Profilabschnitt 22a angeformt ist. Der zweite Profilabschnitt 22b liegt dabei an einer Anlage 32 der Hauptzarge 16 an. Der zweite Profilabschnitt 22b erstreckt sich in einer Hochrichtung H von der Ladeluftzarge 18 zur Hauptzarge 16 hin. Dabei weist der zweite Profilabschnitt 22b eine Ausdehnung in dieser Richtung derart auf, dass dieser im Montagezustand geringfügig gestaucht ist. Wie in den Figuren 6a bis 6c erkennbar ist, weist der zweite Profilabschnitt 22b Sollknickstellen 34 auf. Auf diese Weise erfolgt die Stauchung des zweiten Profilabschnitts 22b in einer definierten Art und Weise.

An der Hauptzarge16 ist des Weiteren eine Haltekontur 36 angeordnet, welche das Profilteil gegen ein Verrutschen zu den Kühlern 12, 14 hin sichert. Die Haltekontur 36 weist hierzu eine Anzahl flossenförmiger Fortsätze 38 auf, welche sich von der Hauptzarge 16 zu den Kühlern 12,14 hin erstreckt. Die Fortsätze 38 liegen an dem zweiten Profilabschnitt 22b an und erhöhen dadurch eine dem Verrutschen entgegenwirkende Reibungskraft.

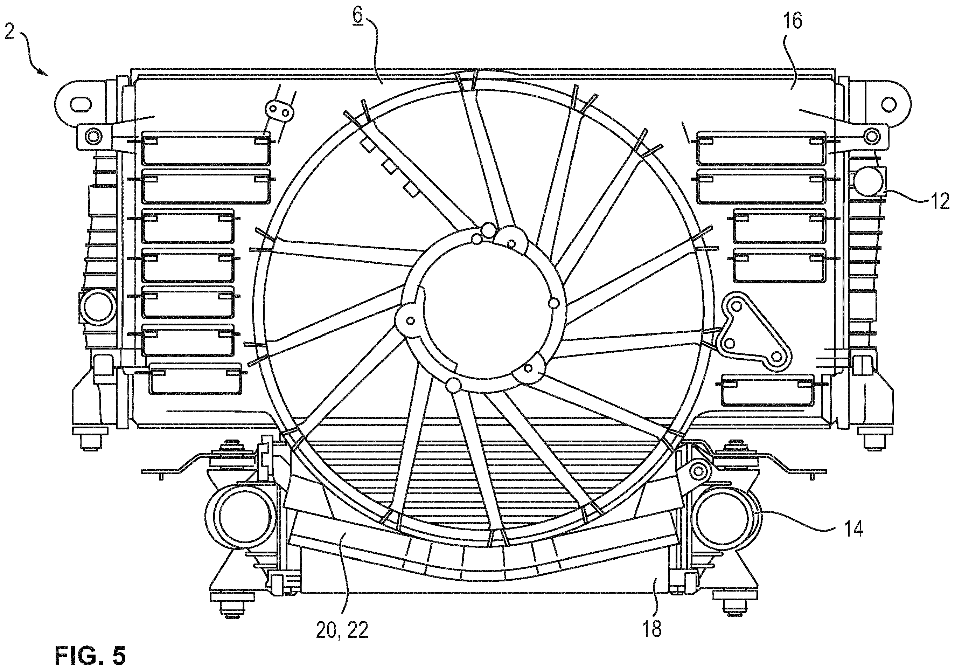

Fig. 5 zeigt eine alternative Ausgestaltung des Lüftermoduls 2. Hierbei ist die Zargenvorrichtung 6 dazu eingerichtet, einen einzigen Elektromotor 8 mit von diesem drehantreibbarem Kühlerrad 10 zu tragen. Dabei überdeckt die Hauptzarge 16 aufgrund deren Ausdehnung den Ladeluftkühler 14 teilweise. Zudem sind die Ränder 26 der Zargen 16 und 18 bogenförmig. Das Profilteil 22 ist aufgrund deren leichten Verformbarkeit ebenfalls für diese Ausführung der Zargen 16 und 18 verwendbar. So gelten die oben genannten Ausführungen bezüglich des Profilteils 22 und dessen Kopplung mit den beiden Zargen 16 und 18 in analoger Weise.

In den Figuren 6a bis 6c ist das Profilteil 22 im ungestauchtem, in teilweise gestauchtem und in vollständig gestauchtem Zustand dessen zweiten Profilabschnitts 22b gezeigt. Die Relativbewegung zwischen der Hauptzarge 16 und der Ladeluftzarge 18 bei Betrieb des Kraftfahrzeugs wird entsprechend durch eine weitere Stauchung oder durch eine Entstauchung ausgeglichen.

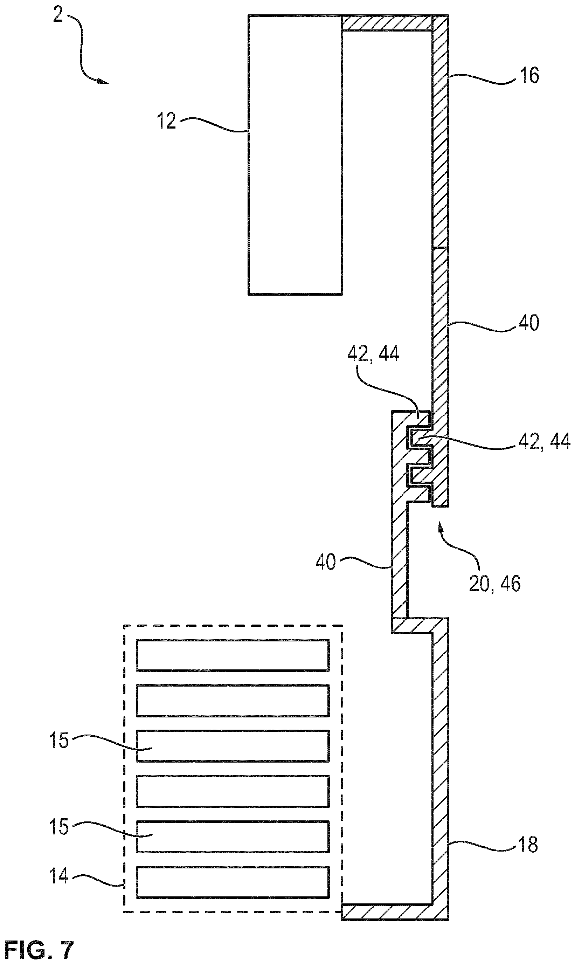

In der Fig. 7 ist eine nicht erfindungsgemäße Variante der Zargenvorrichtung 6 dargestellt. Dabei weisen die Hauptzarge 16 sowie die Ladeluftzarge 18 an einander zugewandten Stirnseiten einen sich zur jeweils anderen Zarge 18 bzw. 16 hin erstreckenden und angeformten Wandabschnitt 40 auf. Die beiden Wandabschnitte 40 überdecken sich dabei abschnittsweise in einer als Längsrichtung L bezeichneten Zargennormale, welche senkrecht zur Hochrichtung H ist und von der Hauptzarge 16 zum Hauptkühler 12 hin verläuft. Die Wandabschnitte 40 weisen an den sich gegenüberliegenden Seiten im sich überdeckenden Bereich jeweils eine Labyrinthkontur 42 mit rippenartigen Formelementen 44 auf, welche unter Bildung einer Labyrinthdichtung 46 miteinander verkämmen. Zusammenfassend ist die Dichtung 20 als Labyrinthdichtung 46 ausgebildet.

Die in der Fig.7 dargestellte Labyrinthdichtung 46 ist dabei repräsentativ und schematisch dargestellt. Es können auch alternative oder auch an sich bekannte Ausgestaltungen einer geeigneten Labyrinthdichtung 46 vorgesehen sein.

Die Erfindung ist nicht auf die vorstehend beschriebenen Ausführungsbeispiele beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- 2: Kühleranordnung
- 4: Lüftermodul
- 6: Zargenvorrichtung
- 8: Elektromotor
- 10: Lüfterrad
- 12: Hauptkühler
- 14: Ladeluftkühler
- 15: Rohr
- 16: Hauptzarge
- 18: Ladeluftzarge
- 20: Dichtung
- 22: Profilteil
- 22a: erster Profilabschnitt
- 22b: zweiter Profilabschnitt
- 24: Profilkontur
- 26: Rand
- 28: Fügekontur
- 30: Halteelemente
- 32: Anlage
- 34: Sollknickstelle
- 36: Haltekontur
- 38: Fortsatz
- 40: Wandabschnitt
- 42: Labyrinthkontur
- 44: Formelement
- 46: Labyrinthdichtung

- H: Hochrichtung
- L: Längsrichtung

## Patentansprüche

1. Zargenvorrichtung (6) für ein Lüftermodul (4) für einen Hauptkühler (12) sowie für einen Ladeluftkühler (14) eines Kraftfahrzeugs, aufweisend
- eine Hauptzarge (16) für den Hauptkühler (12) und eine zu dieser separaten Ladeluftzarge (18) für den Ladeluftkühler (14),
- wobei zwischen der Hauptzarge (16) und der Ladeluftzarge (18) eine Dichtung (20) vorgesehen ist,
- wobei die Dichtung (20) mittels eines separaten und elastischen Profilteils (22) gebildet ist, welches zumindest an der Hauptzarge (16) oder an der Ladeluftzarge (18) befestigt ist,
- **dadurch gekennzeichnet dass**, das Profilteil (22) einen schlauchförmigen zweiten Profilabschnitt (22b) aufweist, der an der Hauptzarge (16) anliegt, sofern das Profilteil (22) an der Ladeluftzarge befestigt ist, oder wobei das Profilteil (22) an der Ladeluftzarge anliegt, sofern das Profilteil (22) an der Hauptzarge befestigt ist, und
- wobei der zweite Profilabschnitt (22b) eine Ausdehnung in einer Hochrichtung (H) von der Ladeluftzarge (18) zur Hauptzarge (16) aufweist, sodass der zweite Profilabschnitt (22b) im Montagezustand bezüglich der Hochrichtung (H) gestaucht ist.

2. Zargenvorrichtung (6) nach Anspruch 1,
**dadurch gekennzeichnet,**
**dass** die Hauptzarge (16) oder die Ladeluftzarge (18) an einem der jeweils anderen Zarge zugewandten Rand (26), insbesondere hakenförmige, Halteelemente (30) für das Profilteil (22) aufweist.

3. Zargenvorrichtung (6) nach Anspruch 2,
**dadurch gekennzeichnet,**
**dass** das Profilteil (22) einen ersten Profilabschnitt (22a) aufweist, welcher den die Halteelemente (30) aufweisenden Rand (26) umfasst, und welcher an der am Rand (26) anliegenden Wandung eine Profilkontur (24) aufweist, die eine Fügekontur (28) des Randes (26) umgreift.

4. Zargenvorrichtung (6) nach einem der Ansprüche 1 bis 3,
- **dadurch gekennzeichnet,**
- **dass**, sofern das Profilteil (22) an der Hauptzarge (16) befestigt ist, eine Haltekontur (36) an der Ladeluftzarge (18) angeordnet ist, welche das Profilteil (22) gegen ein Verrutschen zu den Kühlern (12,14) hin sichert, oder
- **dass**, sofern das Profilteil (22) an der Ladeluftzarge (18) befestigt ist, die Haltekontur (36) an der Hauptzarge (16) angeordnet ist.

5. Lüftermodul (4) für einen Hauptkühler (12) sowie für einen Ladeluftkühler (14) eines Kraftfahrzeugs, mit einer Zargenvorrichtung (6) nach einem der Ansprüche 1 bis 4.

## Claims

1. Frame device (6) for a fan module (4) for a main cooler (12) and for a charge air cooler (14) of a motor vehicle, comprising
- a main frame (16) for the main cooler (12) and a charge air frame (18), separate therefrom, for the charge air (14),
- wherein a seal (20) is provided between the main frame (16) and the charge air frame (18),
- wherein the seal (20) is formed by means of a separate and elastic profile part (22), which is fastened at least to the main frame (16) or to the charge air frame (18),
**characterized in that**
- the profile part (22) comprises a tubular second profile section (22b), which bears against the main frame (16) provided that the profile part (22) is fastened to the charge air frame, or wherein the profile part (22) bears against the charge air frame provided that the profile part (22) is fastened to the main frame, and
- wherein the second profile section (22b) comprises an extension in a vertical direction (H) from the charge air frame (18) to the main frame (16), so that the second profile section (22b) is compressed with respect to the vertical direction (H) in the assembled state.

2. Frame device (6) according to claim 1,
**characterized in**
**that** the main frame (16) or the charge air frame (18) comprises, in particular hook-shaped, holding elements (30) for the profile section (22) on an edge (26) facing the respective other frame.

3. Frame device (6) according to claim 2,
**characterized in**
**that** the profile part (22) comprises a first profile section (22a), which includes the edge (26) comprising the holding elements (30), and which comprises, on the wall bearing against the edge (26), a profile contour (24) that engages around a joining contour (28) of the edge (26).

4. Frame device (6) according to one of claims 1 to 3,
**characterized in**
**that**, provided that the profile part (22) is fastened to the main frame (16), a holding contour (36) is arranged on the charge air frame (18), said holding contour (36) securing the profile part (22) against slipping towards the coolers (12, 14), or
**that**, provided that the profile part (22) is fastened to the charge air frame (18), the holding contour (36) is arranged on the main frame (16).

5. Fan module (4) for a main cooler (12) and for a charge air cooler (14) of a motor vehicle, with a frame device (6) according to one of claims 1 to 4.

## Revendications

1. Dispositif de cadre (6) pour un module de ventilateur (4) pour un refroidisseur principal (12) et pour un refroidisseur d'air de suralimentation (14) d'un véhicule à moteur, comprenant
- un cadre principal (16) pour le refroidisseur principal (12) et un cadre d'air de charge (18), séparé de celui-ci, pour le refroidisseur d'air de suralimentation (14),
- dans lequel une étanchéité (20) est prévue entre le cadre principal (16) et le cadre d'air de suralimentation (18),
- dans lequel la étanchéité (20) est formée au moyen d'une partie profilée séparée et élastique (22), qui est fixée au moins au cadre principal (16) ou au cadre d'air de suralimentation (18),
**caractérisé en ce que**
- la partie profilée (22) comprend une deuxième section de profil tubulaire (22b), qui s'appuie contre le cadre principal (16) si la partie profilée (22) est fixée au cadre de l'air de charge, ou dans lequel la partie profilée (22) s'appuie contre le cadre de l'air de charge si la partie profilée (22) est fixée au cadre principal, et
- dans lequel la deuxième section profilée (22b) comprend une extension dans une direction verticale (H) depuis le cadre d'air de charge (18) jusqu'au cadre principal (16), de sorte que la deuxième section profilée (22b) est comprimée par rapport à la direction verticale (H) dans l'état assemblé.

2. Dispositif de cadre (6) selon la revendication 1,
**caractérisé par**
que le cadre principal (16) ou le cadre d'air de suralimentation (18) comprend, sur un bord (26) tourné vers l'autre cadre, des éléments de support (30), en particulier en forme de crochet, pour la partie profilée (22).

3. Dispositif de cadre (6) selon la revendication 2,
**caractérisé en ce**
**que** la partie de profilé (22) comprend une première section profilée (22a), qui inclut le bord (26) comprenant les éléments de support (30), et qui comprend, sur la paroi s'appuy ant contre le bord (26), un contour profilé (24), qui s'engage autour d'un contour de jonction (28) du bord (26).

4. Dispositif de cadre (6) selon l'une des revendications 1 à 3,
**caractérisé en ce**
**que**, si la partie profilée (22) est fixée au cadre principal (16), un contour de support (36) est disposé sur le cadre d'air de suralimentation (18), ledit contour de support (36) protégeant la partie profilée (22) contre tout glissement vers les refroidisseurs (12, 14), ou
**que**, dans si la partie profilée (22) est fixée au cadre d'air de suralimentation (18), le contour de support (36) est disposé sur le cadre principal (16).

5. Module de ventilateur (4) pour un refroidisseur principal (12) et pour un refroidisseur d'air de suralimentation (14) d'un véhicule automobile, avec un dispositif de cadre (6) selon l'une des revendications 1 à 4.
